# EUROPÄISCHE PATENTANMELDUNG

(11) **EP 2 409 879 A1**
(43) Veröffentlichungstag der Anmeldung: **25.01.2012**
(21) Anmeldenummer: 11005474.9
(22) Anmeldetag: 05.07.2011
(51) Int. Cl.: B60R 1/00, B60R 1/04, G02B 7/182

(54) **Spiegelanordnung zur Überwachung eines Passagierinnenraums eines Flugzeugs**

(30) Priorität: 23.07.2010 DE 102010032054; 23.07.2010 US 366972 P
(71) Anmelder: Airbus Operations GmbH, 21129 Hamburg (DE)
(72) Erfinder: Klepka, Frank, 13189 Berlin (DE); Wätzold, Stephan, 22587 Hamburg (DE); Möller, Wolfgang, 22524 Itzehoe (DE)
(74) Vertreter: Schicker, Silvia

(57) **Zusammenfassung**

Die vorliegende Erfindung betrifft eine Spiegelanordnung (10) zur Überwachung eines Passagierinnenraums eines Flugzeugs, umfassend wenigstens ein Spiegelelement (40) zur Reflexion von Licht und eine Spiegelhalterung (20) zur Befestigung des wenigstens einen Spiegelelements (40) innerhalb des Passagierinnenraums, wobei die Spiegelhalterung (20) einen Halter (22) umfasst, an dem das wenigstens eine Spiegelelement (40) befestigbar ist und der relativ zu dem Passagierinnenraum verlagerbar ist.

## Beschreibung

Die vorliegende Erfindung betrifft eine Spiegelanordnung zur Überwachung eines Passagierinnenraums eines Flugzeugs. Die Spiegelanordnung umfasst wenigstens ein Spiegelelement zur Reflexion von Licht und eine Spiegelhalterung zur Befestigung des wenigstens einen Spiegelelements innerhalb des Passagierinnenraums.

Grundsätzlich gehört zu den Hauptaufgaben des flugbegleitenden Personals im Passagierinnenraum (Flugbegleiter) die Gewährleistung von Sicherheit und die Betreuung der Passagiere. Insbesondere zur Gewährleistung der Sicherheit der Passagiere im Passagierinnenraum bzw. in der Flugzeugkabine ist es daher notwendig, dass die Flugbegleiter einen Überblick über die Geschehnisse im Passagierinnenraum behalten.

In den vergangenen Jahren sind die Größe von Verkehrsflugzeugen und die Anzahl der Passagiere pro Verkehrsflugzeug stark angestiegen, so dass es für das flugbegleitende Personal zunehmend schwieriger geworden ist, den gesamten Passagierinnenraum oder den jeweils zugeteilten Bereich des Passagierinnenraums zu überblicken. Darüber hinaus sind Passagierinnenräume moderner Flugzeuge oftmals durch unterschiedliche Einbauten in einzelne Bereiche unterteilt. Solche Einbauten (sogenannte "Monuments" bzw. Monumente) umfassen beispielsweise eine Bord-Küche (die sogenannte "Galley"), Toilettenbereiche (sogenannte "Lavatories") oder den Personalruhebereich für das flugbegleitende Personal (das sogenannte "Flight Crew Rest Compartment", FCRC). Durch derartige Einbauten kann die Sicht des Flugpersonals zusätzlich behindert werden. Gleiches gilt gegebenenfalls für Trennwände oder Vorhänge, die zwischen den unterschiedlichen Sitzklassen des Passagierinnenraums (z.B. First Class, Business Class und Economy Class) zu deren Abtrennung angeordnet sein können.

Insbesondere in solchen Situationen, in denen die Flugbegleiter selbst dazu aufgefordert werden, ihre Sitzplätze einzunehmen, beispielsweise bei dem Start und der Landung eines Flugzeugs oder bei Turbulenzen während des Flugs, ist der Überblick über den Passagierinnenraum bzw. den zugeteilten Bereich des Passagierinnenraums für das flugbegleitende Personal deutlich erschwert.

Um diesem Problem zu begegnen, ist es aus dem Stand der Technik bereits bekannt, an einer Kabineninnenwand der Flugzeugkabine einen Spiegel anzubringen, so dass ein Flugbegleiter auch dann, wenn er seinen Sitz eingenommen hat, über den Spiegel einen rückwärtigen Teil des Passagierinnenraums überblicken kann. Der Spiegel weist bei einer bekannten Lösung eine konvexe Form auf und ermöglicht dadurch einen gegenüber einem flachen Spiegel vergrößerten Blickwinkel. Jedoch nimmt ein solcher konvex geformter Spiegel einen größeren Bauraum als ein flacher Spiegel ein, was in der Praxis zu Problemen führen kann.

Eine alternative Lösung mit einem flachen Spiegel nimmt zwar einen geringeren Bauraum im Passagierinnenraum ein. Jedoch ist auch der durch den Spiegel zur Verfügung gestellte Blickwinkel gegenüber der Lösung mit einem konvexen Spiegel verringert, so dass ein Flugbegleiter mit einem flachen Spiegel nur einen geringeren Teil des Passagierinnenraums überblicken kann.

Aus der US 5,847,889 ist eine weitere Spiegelanordnung bekannt, bei der der Spiegel infolge seiner konstruktiven Gestaltung in der Art einer Fresnel-Linse einen vergleichsweise weiten Blickwinkel ermöglicht und gleichzeitig eine flache Form aufweist. Nichtsdestotrotz können sich in der Praxis, wie Umfragen ergeben haben, Probleme bei der Nutzung eines solchen Spiegels einstellen. So wurde vom Flugpersonal berichtet, dass die Spiegelobertläche oftmals verschmutzt ist und dass der Reflexionswinkel des Spiegels je nach Körpergröße, Sitzhöhe und Blickrichtung für den einen Flugbegleiter günstig sein mag, während er für den anderen Flugbegleiter ungünstig ist.

Ein weiteres Problem, das aus dem Stand der Technik bekannt geworden ist, besteht darin, dass nicht an jeder Innenwand der Passagierkabine ein Spiegel angebracht werden kann, da der entsprechende Bauraum bereits infolge anderer Anforderungen an den Passagierinnenraum blockiert ist. So ist es, wie bereits ausgeführt, notwendig, dass der Spiegel nicht an einer Stelle angebracht ist, an der er den Bewegungsraum des Flugpersonals oder der Passagiere einschränken und diese behindern kann (beispielsweise in einer Notfallsituation), indem er beispielsweise in den Gang zwischen den Sitzreihen hineinragt.

Weiterhin ist beispielsweise im Bereich der Einbauten der Bauraum durch das Erfordernis der uneingeschränkten Zugänglichkeit zu den Türen, zu Aufnahmen für die Boxen, Trolleys oder zu anderen Elemente (z.B. in der Bordküche) blockiert. Ein Teil des Bauraums in der Küche eines Flugzeugs ist zudem durch festeingebaute Elektrogeräte (z.B. Kaffeemaschine) blockiert, so dass bei einer Anbringung eines Spiegels an einer dahinter liegenden Wand das Sichtfeld durch diese beeinträchtigt wäre. Somit sind in vielen Bereichen der Passagierkabine Spiegelanordnungen nur unter großen Schwierigkeiten und unter Berücksichtigung vieler anderer Anforderungen an den Passagierinnenraum anbringbar.

Demgegenüber besteht eine Aufgabe der vorliegenden Erfindung darin, eine weiterentwickelte Spiegelanordnung bereitzustellen, die eine einfache Anbringung einer Spiegelanordnung gewährleistet und gleichzeitig dem Flugpersonal einen guten Überblick über den Passagierinnenraum ermöglicht.

Diese Aufgabe wird gemäß einem ersten Aspekt der Erfindung durch eine Spiegelanordnung gelöst, die wenigstens ein Spiegelelement zur Reflexion von Licht und eine Spiegelhalterung zur Befestigung des wenigstens einen Spiegelelements innerhalb des Passagierinnenraums umfasst, wobei die Spiegelhalterung einen Halter umfasst, an dem das wenigstens eine Spiegelelement befestigbar ist und der relativ zu dem Passagierinnenraum verlagerbar ist.

Gemäß diesem ersten Aspekt der Erfindung ist die Spiegelanordnung nicht starr, d.h. unbeweglich, an einer Innenwand des Passagierinnenraums angebracht, sondern derart, dass sie relativ zu dem Passagierinnenraum verlagerbar, d.h. verschiebbar entlang einer oder mehrerer Verschiebungsachsen und/oder um eine oder mehrere Schwenkachsen verschwenkbar ist. Dies hat wiederum den Vorteil, dass sich die Spiegelanordnung von dem Flugbegleiter auf seine Größe, seine Sitzhöhe und seine Blickrichtung anpassen lässt. Weiterhin lässt sich der Blickwinkel verstellen, so dass ein guter Überblick über den Passagierinnenraum gewährleistet werden kann.

Das Spiegelelement kann je nach Bedarf flach oder konvex ausgebildet sein oder eine spezielle Oberfläche (z.B. in der Art einer Fresnel-Linse) aufweisen. Weiterhin ist es möglich, an dem Halter mehrere Spiegelelemente zu befestigen, beispielsweise ein flaches Spiegelelement in Kombination mit einem kleineren oder größeren konkaven Spiegelelement und dergleichen. Das Spiegelelement kann aus jedem denkbaren Material hergestellt sein, das eine Reflexion von Licht erlaubt und so eine Spiegelung des Passagierinnenraums auf seiner Oberfläche ermöglicht.

Weiterhin kann gemäß einem zweiten Aspekt der Erfindung der Halter zwischen einer Arbeitsposition und einer Ruheposition hin- und her bewegbar ist, wobei die Spiegelhalterung eine Aufnahmeöffnung umfasst, in der der Halter in seiner Ruheposition wenigstens teilweise aufnehmbar ist.

Eine solche Spiegelanordnung hat gegenüber dem Stand der Technik den Vorteil, dass sie, solange der Halter in seiner Ruheposition ist, keinen oder einen geringeren zugänglichen Bauraum innerhalb der Flugzeugkabine einnimmt und so die Bewegungsfähigkeit des Flugpersonals oder der Passagiere nicht oder nur geringfügig einschränkt. Erst wenn der Spiegel, d.h. das Spiegelelement zur Reflexion von Licht, genutzt werden soll, beispielsweise in einer der vorstehend genannten Situationen, in der der Flugbegleiter seinen Sitzplatz eingenommen hat, wird der Halter, an dem das Spiegelelement befestigt ist, in eine Arbeitsposition bewegt.

Auf diese Weise kann die Spiegelanordnung auch an solchen Stellen angebracht werden, an denen ein fest angebrachter Spiegel als störend empfunden würde, da dieser die Bewegungsfreiheit des Flugpersonals bzw. der Passagiere oder die Zugänglichkeit beispielsweise von Elementen der Bordküche, der Toiletteneinbauten oder des Personalruhebereichs einschränkt. Durch die Bewegbarkeit des Halters hingegen kann sichergestellt werden, dass in Situationen, in denen ein fester Spiegel als störend empfunden würde, der bewegbare Spiegel in seine Ruheposition bewegt werden kann, in der er wenigstens teilweise in einer Aufnahmeöffnung aufgenommen ist und somit weniger Bauraum in dem zugänglichen Passagierinnenraum in Anspruch nimmt als in seiner Arbeitsstellung.

Die Aufnahmeöffnung der Spiegelhalterung kann an einem der sogenannten "Monuments" angeordnet sein, beispielsweise in einer Seitenwand der Küche, der Toilette oder des Personalruhebereichs, oder auch in einer Trennwand für die einzelnen Sitzklassen und dergleichen. Auch kann die Aufnahmeöffnung sich in unterschiedliche Richtungen erstrecken, d.h. bezogen auf den Passagierinnenraumboden senkrecht hierzu, parallel hierzu oder schräg hierzu. Der Halter kann zusammen mit dem daran befestigten wenigstens einen Spiegelelement teilweise in der Aufnahmeöffnung aufgenommen sein, jedoch ist dieser in einer bevorzugten Ausführungsform vollständig darin aufnehmbar ausgebildet.

Der Halter, an dem das wenigstens eine Spiegelelement befestigbar ist, kann weiterhin entlang einer Verschiebungsachse aus seiner Ruheposition in seine Arbeitsposition verschiebbar ausgebildet sein. Alternativ oder zusätzlich kann der Halter, an dem das wenigstens eine Spiegelelement befestigbar ist, um wenigstens eine Schwenkachse aus seiner Ruheposition in seine Arbeitsposition verschwenkbar ausgebildet sein. Somit ist eine lineare Bewegung des Halters relativ zu der Aufnahmeöffnung, eine rotatorische Bewegung sowie eine kombinierte lineare und rotatorische Bewegung des Halters relativ zu der Aufnahmeöffnung denkbar, um diesen aus seiner Ruheposition in seine Arbeitsposition und zurück zu bewegen.

In einer Weiterbildung der Erfindung kann der Halter in seiner Arbeitsstellung um wenigstens eine Schwenkachse verschwenkbar ausgebildet sein. Dabei kann die Schwenkachse, um die der Halter in seine Arbeitsstellung verschwenkbar ist, eine andere Schwenkachse sein als die, um die der Halter aus seiner Ruheposition in seine Arbeitsposition verschwenkbar ist. Dadurch, dass der Halter in seiner Arbeitsstellung ebenfalls verschwenkbar ist, wird gewährleistet, dass sich der Flugbegleiter diesen je nach seiner eigenen Sitzhöhe und Blickrichtung für einen optimalen Blickwinkel einstellen kann. Dabei ist es selbstverständlich auch denkbar, dass der Halter in seiner Arbeitsstellung, um mehrere Schwenkachsen verschwenkbar ausgebildet ist.

Weiterhin kann der Halter mit dem wenigstens einen Spiegelelement durch eine Verschwenkung in der Arbeitsposition (angepasste Arbeitsposition) gegen eine Bewegung zurück in die Ruheposition gesichert werden, wenn er in seiner angepassten Arbeitsposition nicht mehr in die Aufnahmeöffnung aufgenommen werden kann. Beispielsweise kann dies erreicht werden, indem der Halter in seiner Arbeitsposition um die Verschiebungsachse oder um eine zu der Verschiebungsachse quer (d.h. nicht parallel) verlaufende Achse verschwenkt wird, nachdem er entlang der Verschiebungsachse aus der Ruheposition in die Arbeitsposition verschoben wurde. Ebenso ist es denkbar ihn durch Verschwenken um eine Schwenkachse in seiner Arbeitsposition zu sichern, die quer zu der Schwenkachse verläuft, um die er verschwenkt wurde um ihn aus der Ruheposition in die Arbeitsposition zu bringen.

Ferner kann der Halter zwei Schwenkzapfen aufweisen, die gemeinsam die Schwenkachse ausbilden, wobei innerhalb der Aufnahmeöffnung korrespondierende Lagerstellen vorgesehen sind, an denen die Schwenkzapfen drehbar abgestützt sind. Bei dieser Ausführungsform sind die Schwenkzapfen koaxial zueinander ausgerichtet und erstrecken sich in entgegengesetzter Richtung von dem Halter weg. Die Lagerstellen können beispielsweise durch Vorsprünge oder dergleichen ausgebildet sein. Bei einer Verlagerung des Halters in seine Arbeitsposition durch Verschieben können die Lagerstellen zusätzlich eine Sicherung gegen ein unerwünschtes vollständiges Herauslösen des Halters aus der Aufnahmeöffnung bilden.

Alternativ ist selbstverständlich auch eine Ausführungsform mit einem einzigen durchgehenden Schwenkzapfen denkbar, der an dem Halter angebracht ist und dessen freie Enden sich an den Lagerstellen abstützen können.

In einer Weiterbildung der Erfindung können die Lagerstellen Lageröffnungen umfassen und die Schwenkzapfen können entlang ihrer Längsachse relativ zu dem Halter verschiebbar ausgebildet sein. Diese Ausführungsform ist insbesondere deshalb vorteilhaft, da die Schwenkzapfen durch ihre relative Verschiebbarkeit in die zwei, beispielsweise als Bohrungen (Sacklochbohrung oder Durchgangsbohrung) ausgebildeten, Lageröffnungen eingreifen können und so neben der drehbaren Lagerung des Halters auch eine Sicherung des Halters in seiner Arbeitsstellung ermöglichen. Erst wenn die Schwenkzapfen aus ihrer Eingriffsstellung wieder zurückverschoben werden, geben sie die Lageröffnungen frei und lassen eine Bewegung des Halters in seine Ruheposition zu.

Die Spiegelhalterung kann ferner wenigstens zwei Führungsflächen aufweisen, die die Aufnahmeöffnung begrenzen und dazu ausgebildet sind, den Halter zu führen, wenn er sich zwischen seiner Arbeitsposition und seiner Ruheposition hin- und her bewegt. Um neben einer solchen geführten Bewegung des Halters auch dessen Leichtgängigkeit, d.h. eine möglichst reibungsarme Bewegung, zu ermöglichen, können zusätzlich Rollenlager oder dergleichen an den Führungsflächen vorgesehen sein, die zwischen den Führungsflächen und dem Halter angeordnet sind.

Zudem kann die erfindungsgemäße Spiegelanordnung derart gestaltet sein, dass die Spiegelhalterung eine Antriebseinheit umfasst, die dazu ausgebildet ist, den Halter anzutreiben und dadurch zu verlagern. Eine solche Antriebseinheit kann als aktive oder passive Komponente gestaltet sein. Ein Beispiel für eine passive Komponente ist eine Feder oder ein anderes elastisches Element, das infolge seiner Elastizität eine Rückstellkraft erzeugt, die den Halter antreibt und dadurch zumindest einen Teil der Verlagerbewegung bewirkt. Eine aktive Komponente kann eine hydraulische elektrische oder pneumatische Antriebseinheit umfassen, die eine Verlagerung des Halters bewirkt.

Insbesondere kann eine als aktive Komponente ausgebildete Antriebseinheit vorteilhaft sein, um beispielsweise in Notsituationen den Halter mit dem Spiegelelement automatisch in eine Position (z.B. die in die Aufnahmeöffnung teilweise oder vollständig eingefahrene Ruheposition des Halters) zu bringen, in der er den Bewegungsraum der Flugbegleiter und Passagiere möglichst nicht beeinträchtigt. Unabhängig von der Gestaltung kann die Spiegelhalterung an einem Monument innerhalb des Passagierinnenraums des Flugzeugs anbringbar sein. Bei einer Gestaltungsvariante mit einer Spiegelhalterung, die eine Aufnahmeöffnung aufweist, kann letztere ferner in einer Seitenwand des Monuments ausgebildet sein, beispielsweise in einer Seitenwand der Küche, der Toilette oder des Personalruhebereichs, oder auch in einer Trennwand für die einzelnen Sitzklassen und dergleichen.

Alternativ kann die Spiegelhalterung jedoch auch an einem Flugzeugsitzes Monument innerhalb des Passagierinnenraums des Flugzeugs anbringbar sein. Bei einer Gestaltungsvariante mit einer Spiegelhalterung, die eine Aufnahmeöffnung aufweist, kann letztere zudem in einer Rückenlehne des Flugzeugsitzes ausgebildet sein.

Schließlich kann das Spiegelelement in der Arbeitsstellung des Halter - d.h. bei der Gestaltungsvariante, bei der die Spiegelhalterung keinen zwischen einer Arbeitsposition und einer Ruheposition hin- und her bewegbaren Halter aufweist, in der montierten Stellung des Spiegelelements - derart angeordnet sein, dass es eine Reflexion des Lichts in einen bezogen auf die Flugrichtung des Flugzeugs hinter dem Spiegelelement angeordneten Bereich des Passagierinnenraums ermöglicht. Auf diese Weise kann ein Flugbegleiter auch dann, wenn er seinen (in Flugrichtung orientierten) Sitz eingenommen hat, über die Spiegelanordnung einen rückwärtigen Teil des Passagier-innenraums überblicken kann.

Ein Ausführungsbeispiel der Erfindung wird im folgenden anhand der beigefügten schematischen Figuren erläutert. Es stellen dar:
- Figur 1: eine perspektivische Darstellung der erfindungsgemäßen Spiegelanordnung in eingebautem Zustand,
- Figur 2: eine Schnittansicht der erfindungsgemäßen Spiegelanordnung in ihrer Ruheposition entlang der Linie II-II der Figur 3,
- Figur 3: eine Seitenansicht der erfindungsgemäßen Spiegelanordnung in ihrer Ruheposition,
- Figur 4: eine Seitenansicht der erfindungsgemäßen Luftspiegelanordnung in ihrer Arbeitsposition,
- Figuren 5a - c: unterschiedliche mögliche Einbausituationen der erfindungsgemäßen Spiegelanordnung in einem Passagierinnenraum eines Verkehrsflugzeugs, und
- Figur 6: eine schematische Ansicht des möglichen Blickfelds einer erfindungsgemäßen Spiegelanordnung der Figuren 1 bis 5c in eingebautem Zustand.

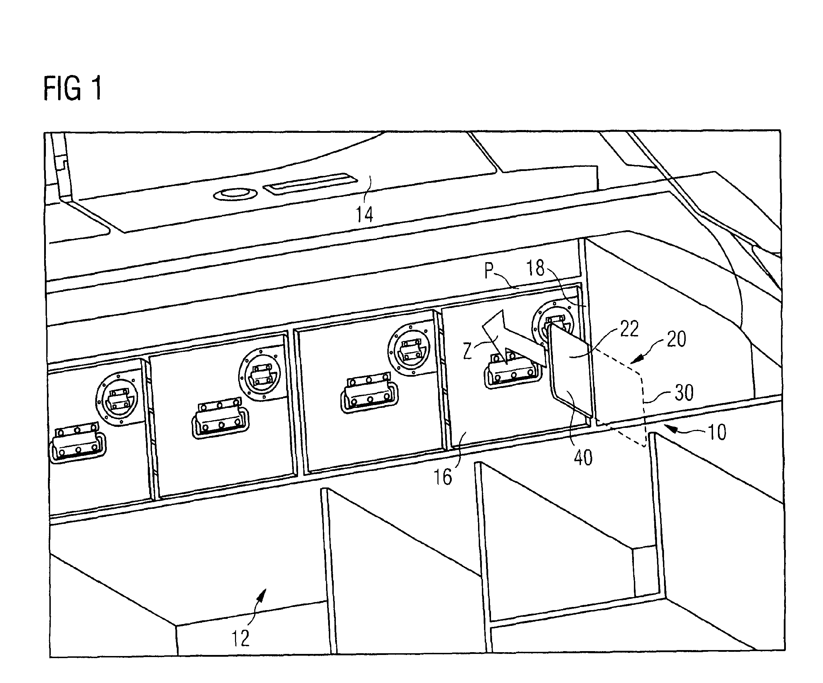

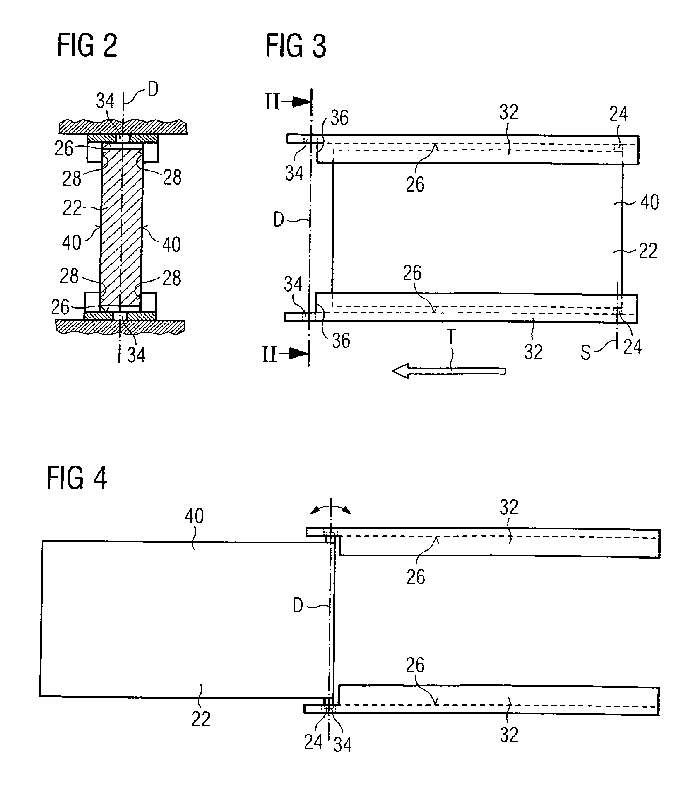

In Fig. 1 ist eine erfindungsgemäße Spiegelanordnung 10 in eingebautem Zustand zu sehen. Die Spiegelanordnung 10 ist an einem sogenannten Monument 12 in einer Passagierkabine angebracht und umfasst eine Spiegelhalterung 20 zur Befestigung eines Spiegelelements 40. Die Spiegelhalterung 20 weist sowohl einen Halter 22 als auch eine (in Fig.1 strichliert angedeutete) Aufnahmeöffnung 30 auf, die in einer Seitenwand 18 des Monuments 12 ausgebildet ist. Wie durch den Pfeil Z in der Fig. 1 angedeutet, lässt sich der Halter 22 der Spiegelhalterung 20 durch eine Auszugsbewegung aus der Aufnahmeöffnung 30 herausziehen. Das Spiegelelement 40 ist beispielsweise durch eine spiegelnde Folie oder dergleichen gebildet, die auf dem Halter 22 wie nachfolgend ausgeführt (vgl. Fig. 2) angebracht ist.

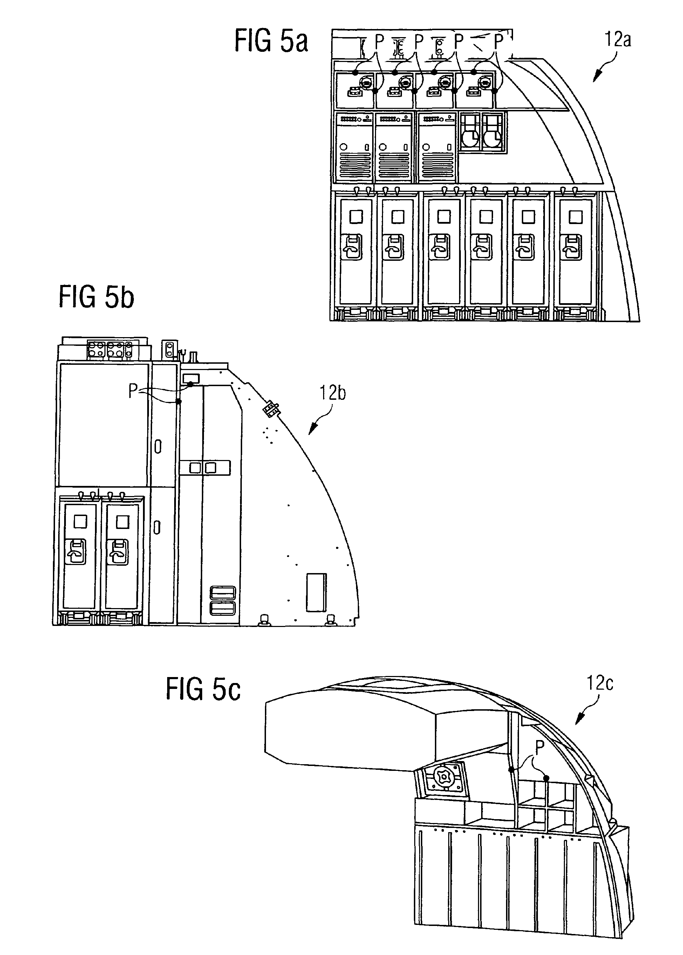

Das Monument 12 umfasst in der dargestellten Ausführungsform unterhalb der Kabinenraumdecke 14 Ausnehmungen zur Aufnahme von Boxen 16 oder dergleichen, die durch Seitenwände begrenzt sind. In der Fig. 1 ist die Aufnahmeöffnung 30 in der Seitenwand 18 des Monuments 12 ausgebildet. Alternativ ist jedoch auch beispielsweise eine Anordnung in einer der anderen Seitenwände möglich, wie durch P in der Fig. 1 und in den Fig. 5a bis c angedeutet.

Die Fig. 2 bis 4 zeigen eine mögliche Ausführungsform einer erfindungsgemäßen Spiegelanordnung 10, wobei sich der Halter 22 der Spiegelhalterung 20 in den Fig. 2 und 3 in seiner Ruheposition, d.h. innerhalb der Aufnahmeöffnung 30 befindet, während er in der in Fig. 4 gezeigten Darstellung aus der Aufnahmeöffnung 30 herausbewegt worden ist und sich in seiner Arbeitsposition befindet. Das Spiegelelement 40 wird beispielsweise durch eine reflektierende Folie gebildet, die auf den Halter 22 aufgeklebt ist und auf diese Weise eine spiegelnde Oberfläche bereitstellt. Alternative Ausgestaltungen sind selbstverständlich ebenfalls denkbar, beispielsweise dass ein Spiegelelement aus Glas oder dergleichen auf den Halter 22 durch Kleben oder andere Fügeverfahren aufgebracht wird. Auch können Spiegelelemente auf den beiden Stirnflächen des Halters 22, wie in Fig. 2 gezeigt, angebracht werden, wodurch eine beidseitige Nutzung des Halters 22 in seiner Arbeitsposition als Spiegel ermöglicht wird. Weiterhin muss das Spiegelelement 40 nicht notwendigerweise, wie in Fig. 2 bis Fig. 4 gezeigt, die gesamte Stirnfläche des Halters 22 abdecken, sondern kann nur eine Teilfläche bedecken. Auch können anstelle eines Spiegelelements 40 auf einer Stirnfläche des Halters 22 auch mehrere Spiegelelemente 40 übereinander oder nebeneinander angeordnet sein.

Die Aufnahmeöffnung 30 wird in der in den Fig. 2 bis 4 gezeigten Ausführungsform durch Führungsschienen 32 begrenzt, die jeweils zwei seitliche einander zugewandte Führungsflächen 28 und eine die verbindende Führungsfläche 26 aufweisen. Mit Hilfe dieser Führungsschienen 32 wird gewährleistet, dass der Halter 22 bei einer Bewegung aus der Aufnahmeöffnung 30 heraus oder in diese hinein sicher geführt wird. Anstelle derartiger Führungsschienen 32 kann die Aufnahmeöffnung 30 jedoch auch nur durch ihre Seitenflächen begrenzt sein, die ebenfalls zur Führung des Halters 22 mit dem Spiegelelement 40 dienen können.

Besonders vorteilhaft sind an den Führungsflächen 28, die den Spiegelelementen 40 zugewandt sind, Materialien angebracht, die ein möglichst reibungsarmes Entlanggleiten der Spiegelelemente 40 an den Führungsflächen 28 ermöglichen. Bei der in den Fig. 2 bis 4 gezeigten Ausgestaltungsvariante mit Führungsschienen 32 ist der Kontaktbereich der Spiegelelemente 40 mit den Führungsflächen 28 verhältnismäßig klein, wobei ein mögliches Verkratzen der spiegelnden Oberfläche der Spiegelelemente 40 durch die Führungsschienen 32 auf diesen Bereich beschränkt ist. Alternativ ließe sich das Spiegelelement 40 auch nur in dem Bereich des Halters 22 anbringen, der nicht in Kontakt mit den Führungsflächen 28 der Führungsschienen 32 gelangt. Weiterhin ist es jedoch auch denkbar, an den Führungsflächen 28 eine Zwischenschicht aus weichem Material, beispielsweise aus Filz oder dergleichen, aufzubringen, die ein Verkratzen der spiegelnden Oberfläche des Spiegelelements 40 verhindert und gegebenenfalls sogar zu einer automatischen Reinigung der Spiegelelemente 40 im Kontaktbereich bei einer Bewegung des Halters 22 relativ zu der Aufnahmeöffnung 30 ermöglicht.

Im Bereich der Führungsflächen 26 können ebenfalls reibungsvermindernde Materialien oder Elemente vorgesehen sein, beispielsweise Rollenlager oder dergleichen, die ein möglichst reibungsarmes Entlanggleiten des Halters 22 an den Führungsflächen 26 ermöglichen.

Der Halter 22 wird in einer Bewegung entlang einer Verschiebungsachse T aus seiner Ruheposition in eine Arbeitsposition (vgl. Fig. 4) verschoben. In seiner Arbeitsposition lässt er sich dann um eine Drehachse D relativ zu der Aufnahmeöffnung 30 verschwenken, welche durch die Führungsschiene 32 begrenzt ist. Hierzu weisen die Führungsschienen 32 zwei Lageröffnungen 34 auf, in die zwei korrespondierende Schwenkzapfen 24 des Halters 22 eingreifen können. Weiterhin sind jeweils im Bereich der Lageröffnungen 34 Schultern 36 ausgebildet, an denen die Führungsflächen 28 enden, so dass ein Verschwenken des Halters 22 ermöglicht wird.

Die Lagerzapfen oder Schwenkzapfen 24 sind in der dargestellten Ausführungsform der Fig. 3 und 4 entlang ihrer Längsachse S bewegbar ausgebildet, so dass sie eine Verschiebung des Halters 22 entlang der Führungsflächen 26 aus der Ruheposition in die Arbeitsposition ermöglichen und in der Arbeitsposition in die Lageröffnungen 34 der Führungsschienen 32 eingreifen können. Damit die Schwenkzapfen 24 relativ zu dem Halter 22 bewegbar sind, können diese als separate Elemente an diesem angeordnet sein, wobei sie sich zumindest teilweise, beispielsweise mit Hilfe einer Feder oder dergleichen relativ zu diesem bewegen lassen. Eine teleskopartige Ausführungsform ist ebenso denkbar, wie die Ausbildung als teilweise in den Halter 22 versenkbare Schwenkzapfen. Alternativ sind selbstverständlich auch andere Gestaltungsmöglichkeiten denkbar, bei denen die Lagerzapfen 24 integral mit dem Halter 22 ausgebildet sind und anstelle von Lageröffnungen 34 eine Lagerschulter im Bereich der Führungsflächen 26 der Führungsschienen 32 vorgesehen ist, die eine drehbare Lagerung der Schwenkzapfen um die Drehachse D ermöglicht.

In den Fig. 5a bis 5c sind weitere möglichen Einbausituationen für eine erfindungsgemäße Spiegelanordnung 10 durch P angedeutet. So zeigt die Fig. 5a schematisch eine Bord-Küche (Galley) 12a eines Passagierinnenraums eines Flugzeugs, während Fig. 5b einen Toilettenbereich (Lavatory) 12b und Fig. 5c einen Personalruhebereich 12c für das Luftpersonal darstellen. Ein Einbau der Spiegelanordnung 10 kann sowohl in den vertikalen als auch in horizontal verlaufenden Seitenwänden der jeweiligen Monumente 12a bis 12c erfolgen.

Alternativ kann eine erfindungsgemäße Spiegelanordnung jedoch auch an einem Flugzeugsitz angebracht werden, wobei eine entsprechende Aufnahmeöffnung an der Rückenlehne des Flugzeugsitzes ausgebildet sein kann. Weiterhin ist es jedoch auch denkbar, eine erfindungsgemäße Spiegelanordnung an weiteren Stellen im Passagierinnenraum anzubringen, beispielsweise indem in den Seitenwänden weiterer Elemente im Passagierinnenraum (in Zwischenwänden der Staufächer, in Zwischenwänden zur Aufteilung des Passagierinnenraums und dergleichen) eine Aufnahmeöffnung für den Halter ausgebildet ist.

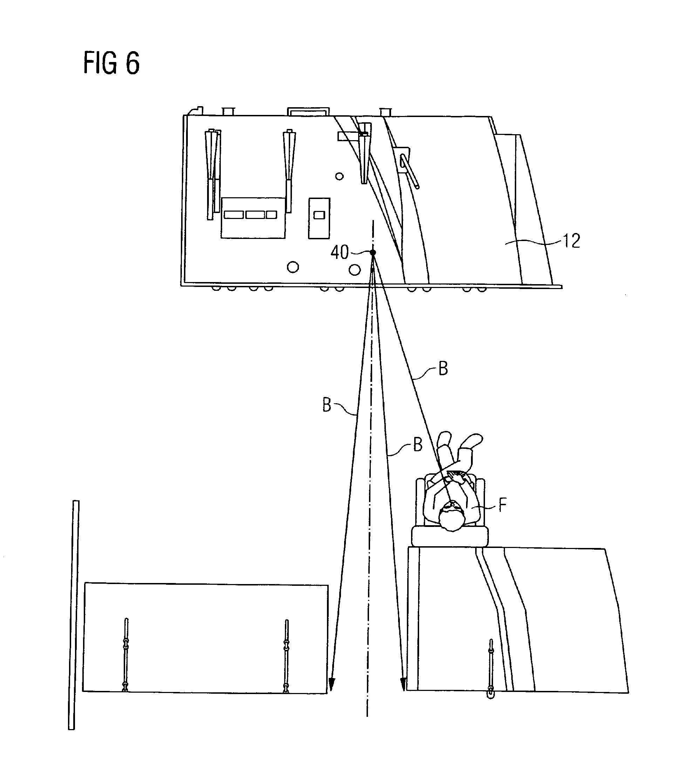

In Fig. 6 ist schließlich eine Draufsicht auf einen Passagierinnenraum eines Flugzeugs gezeigt, bei der ein Flugbegleiter F seinen Sitzplatz eingenommen hat und mit Hilfe einer erfindungsgemäßen Spiegelanordnung den rückwärtigen Bereich des Passagierinnenraums überblicken kann. Die Blickrichtung ist hierbei durch die mit "B" bezeichneten Pfeile der Fig. 6 angedeutet. Aus Fig. 6 wird deutlich, dass der Flugbegleiter F, auch wenn er sitzt, nicht nur den (in Flugrichtung) vor ihm liegenden Bereich des Passagierinnenraums überblicken kann, sondern auch den hinter dem Spiegelelement 40 und hinter ihm liegenden Bereich.

Gemäß einem Aspekt ist bei einer erfindungsgemäßen Spiegelanordnung der Halter in seiner Arbeitsposition verlagerbar, so dass sich ein Flugbegleiter diesen entsprechend seiner Körpergröße, Sitzhöhe und seiner Blickrichtung entsprechend einstellen kann, um den von ihm gewünschten Bereich des Passagierinnenraums überblicken zu können.

Dadurch, dass die erfindungsgemäße Spiegelanordnung eine Spiegelhalterung umfasst, bei der der Halter mitsamt des Spiegelelements in einer Aufnahmeöffnung zumindest teilweise aufnehmbar ist, nimmt dieser darüber hinaus in seiner Ruheposition keinen für anderen Zwecke benötigten Bauraum im Passagierinnenraums des Flugzeugs ein. Auf diese Weise wird der dem Flugpersonal und den Passagieren zur Verfügung stehende Bewegungsraum, der ohnehin in einem Verkehrsflugzeug knapp bemessen ist, nicht weiter durch zusätzliche Spiegelanordnungen eingeschränkt. Erst wenn die Flugbegleiter ihre Plätze eingenommen haben und die Spiegelanordnung zur Überwachung des Passagierinnenraums genutzt werden soll, wird der Halter zusammen mit dem Spiegelelement in seine Arbeitsposition gebracht, indem er aus der Aufnahmeöffnung herausbewegt wird. Da die Flugbegleiter wie auch die Passagiere in solchen Situationen (beispielsweise bei Start und Landung des Flugzeugs, Turbulenzen während des Flugs und dergleichen) ohnehin daran gehalten sind, auf ihren Plätzen zu bleiben, stellt der in seiner Arbeitsposition befindliche Spiegel keine Einschränkung des Bewegungsfreiraums dar.

Neben einer manuellen Verstellbarkeit kann auch eine automatische Verstellung sinnvoll sein. Beispielsweise kann mit Hilfe einer Antriebseinheit eine Verlagerung des Halters in bestimmten Situationen halbautomatisch (durch manuelle Aktivierung) oder automatisch erreicht werden.

## Patentansprüche

1. Spiegelanordnung (10) zur Überwachung eines Passagierinnenraums eines Flugzeugs, umfassend:
- wenigstens ein Spiegelelement (40) zur Reflexion von Licht und
- eine Spiegelhalterung (20) zur Befestigung des wenigstens einen Spiegelelements innerhalb des Passagierinnenraums,
wobei die Spiegelhalterung (20) einen Halter (22) umfasst, an dem das wenigstens eine Spiegelelement (40) befestigbar ist und der relativ zu dem Passagierinnenraum verlagerbar ist.

2. Spiegelanordnung (10) nach Anspruch 1,
wobei der Halter (22) zwischen einer Arbeitsposition und einer Ruheposition hin und her bewegbar ist, und wobei die Spiegelhalterung (20) ferner eine Aufnahmeöffnung (30) umfasst, in der der Halter (22) in seiner Ruheposition wenigstens teilweise aufnehmbar ist.

3. Spiegelanordnung (10) nach Anspruch 1 oder 2,
wobei der Halter (22), an dem das wenigstens eine Spiegelelement (40) befestigbar ist, entlang einer Verschiebungsachse (T) aus seiner Ruheposition in seine Arbeitsposition verschiebbar ausgebildet ist.

4. Spiegelanordnung (10) nach einem der Ansprüche 1 bis 3,
wobei der Halter (22), an dem das wenigstens eine Spiegelelement (40) befestigbar ist, um wenigstens eine Schwenkachse (D) verschwenkbar ausgebildet ist.

5. Spiegelanordnung (10) nach einem der Ansprüche 1 bis 4,
wobei der Halter (22) in seiner Arbeitsstellung um die wenigstens eine Schwenkachse (D) verschwenkbar ausgebildet ist.

6. Spiegelanordnung (10) nach einem der Ansprüche 4 oder 5,
wobei der Halter (22) zwei Schwenkzapfen (24) aufweist, die gemeinsam die Schwenkachse (D) ausbilden, und wobei innerhalb der Aufnahmeöffnung (30) korrespondierende Lagerstellen vorgesehen sind, an denen die Schwenkzapfen (24) drehbar abgestützt sind.

7. Spiegelanordnung (10) nach Anspruch 6,
wobei die Lagerstellen Lageröffnungen (34) umfassen und wobei die Schwenkzapfen (24) entlang ihrer Längsachse (S) relativ zu dem Halter (22) verschiebbar ausgebildet sind.

8. Spiegelanordnung (10) nach einem der Ansprüche 2 bis 7,
wobei die Spiegelhalterung (20) wenigstens zwei Führungsflächen (26, 28) aufweist, die die Aufnahmeöffnung (30) begrenzen und dazu ausgebildet sind, den Halter (22) zu führen, wenn er zwischen seiner Ruheposition und seiner Arbeitsposition hin und her bewegt wird.

9. Spiegelanordnung (10) nach einem der Ansprüche 1 bis 8,
wobei die Spiegelhalterung (20) ferner eine Antriebseinheit umfasst, die dazu ausgebildet ist, den Halter (22) anzutreiben und dadurch zu verlagern.

10. Spiegelanordnung (10) nach einem der Ansprüche 1 bis 9,
wobei die Spiegelhalterung (20) an einem Monument (12) innerhalb des Passagierinnenraums des Flugzeugs anbringbar ist.

11. Spiegelanordnung (10) nach Anspruch 10,
wobei die Aufnahmeöffnung (30) der Spiegelhalterung (20) in einer Seitenwand (18) des Monuments (12) ausgebildet sein kann.

12. Spiegelanordnung (10) nach einem der Ansprüche 1 bis 9,
wobei die Spiegelhalterung (20) an einem Passagiersitz im Passagierinnenraum des Flugzeugs anbringbar ist.

13. Spiegelanordnung (10) nach Anspruch 12,
wobei die Aufnahmeöffnung (30) der Spiegelhalterung (20) in einer Rückenlehne des Passagiersitzes ausgebildet sein kann

14. Spiegelanordnung (10) nach einem der Ansprüche 2 bis 11,
wobei das Spiegelelement (40) in der Arbeitsstellung des Halters (22) derart angeordnet ist, dass es eine Reflexion des Lichts in einen bezogen auf die Flugrichtung des Flugzeugs hinter dem Spiegelelement (30) angeordneten Bereich des Passagierinnenraums ermöglicht.
